(19) Europäisches Patentamt
European Patent Office
Office européen des brevets

(11) **EP 4 477 774 A1**

(12) **EUROPEAN PATENT APPLICATION**
published in accordance with Art. 153(4) EPC

(43) Date of publication:
**18.12.2024 Bulletin 2024/51**

(21) Application number: **22935636.5**

(22) Date of filing: **31.10.2022**

(51) International Patent Classification (IPC):
**C22C 38/00** (2006.01)    **C21D 9/46** (2006.01)
**C22C 38/06** (2006.01)    **C22C 38/60** (2006.01)

(52) Cooperative Patent Classification (CPC):
**C21D 9/46; C22C 38/00; C22C 38/06; C22C 38/60**

(86) International application number:
**PCT/JP2022/040835**

(87) International publication number:
**WO 2023/188505 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057721**

(71) Applicant: **JFE Steel Corporation**
**Tokyo 100-0011 (JP)**

(72) Inventors:
• **YOSHIOKA, Shimpei**
  **Tokyo 100-0011 (JP)**
• **KIMURA, Hideyuki**
  **Tokyo 100-0011 (JP)**
• **HONDA, Yuma**
  **Tokyo 100-0011 (JP)**

(74) Representative: **Haseltine Lake Kempner LLP**
**One Portwall Square**
**Portwall Lane**
**Bristol BS1 6BH (GB)**

(54) **STEEL SHEET AND MEMBER, AND METHODS FOR PRODUCING SAME**

(57)    Provided is a steel sheet that simultaneously achieves a strength of TS: 1310 MPa or more and excellent formability. The steel sheet has a defined chemical composition and a complex structure consisting mainly of martensite and bainite, where carbides in the grains of martensite and bainite are 5 % or more and 25 % or less, and the dispersion interval of carbides satisfies Expression (1).

*FIG. 1*

$$r = \frac{\left(\frac{w}{2}\right)^2 + h^2}{2h}$$

h

w (2 mm constant)

**Description**

TECHNICAL FIELD

The present disclosure relates to a steel sheet, a member, and methods of producing same.

BACKGROUND

In recent years, the application of high strength steel sheets to automotive body frame components has been increasing due to further need for weight reduction of automotive bodies.

As an example of such a high strength steel sheet, Patent Literature (PTL) 1 describes:

"a high strength cold-rolled steel sheet having excellent bendability and comprising a chemical composition containing, in mass%,
C: 0.15 % to 0.30 %,
Si: 1.0 % to 3.0%,
Mn: 0.1 % to 5.0 %,
P: 0.1 % or less (inclusive of 0 %),
S: 0.010 % or less (inclusive of 0 %),
N: 0.01 % or less, and
Al: 0.001 % to 0.10 %,
with the balance consisting of iron and inevitable impurity, wherein
martensite is present in an area fraction of 95 % or more, while retained austenite and ferrite are present in a total area fraction of less than 5 % (inclusive of 0 %),
further, average size of carbides is 60 nm or less in circle equivalent diameter and number density of carbides having a circle equivalent diameter of 25 nm or more is 0 per $mm^2$,
yield stress is 1180 MPa or more, and tensile strength is 1470 MPa or more."

PTL 2 describes:

"an ultra-high strength steel sheet having excellent yield ratio and workability and comprising a chemical composition containing, in mass%,
C: 0.15 % to 0.35 %,
Si: 0.5 % to 3.0 %,
Mn: 0.5 % to 1.5 %, and
Al: 0.001 % to 0.10 %,
with the balance being iron and inevitable impurity, wherein
the inevitable impurity includes P, S, and N, respectively restricted to
P: 0.1 % or less,
S: 0.01 % or less, and
N: 0.01 % or less,
and area fractions for overall microstructure are
martensite: 90 % or more, and
retained austenite: 0.5 % or more,
an area fraction where local Mn concentration is 1.2 times or more than that of total Mn content of the steel sheet is 1 % or more,
tensile strength is 1470 MPa or more, yield ratio is 0.75 or more, and total elongation is 10 % or more."

CITATION LIST

Patent Literature

PTL 1: JP 6017341 B2
PTL 2: JP 2016-148098 A

SUMMARY

(Technical Problem)

Conventionally, when applying high strength steel sheets to automotive body frame components, application of high strength steel sheets by hot press forming, in which steel sheets are heated and pressed, has been vigorously studied. Recently, however, the application of high strength steel sheets by cold press forming (hereinafter also referred to as cold pressing) is being considered once again from the viewpoints of cost and productivity.

In designing the microstructure of high strength steel sheets, in particular steel sheets having a tensile strength (hereinafter also referred to as TS) of 1310 MPa or more, it is considered effective to make the microstructure mainly be composed of martensite and bainite (which more easily provide higher strength compared to ferrite and pearlite). However, high strength steel sheets having mainly martensite or bainite microstructures have lower ductility than steel sheets with a complex structure containing soft microstructures such as ferrite and pearlite.

Further, to form components having relatively complex shapes, such as in stretch forming, not only local ductility, such as bendability, but also ductility during uniform deformation is required. However, the high strength steel sheet described above also has poor ductility during uniform deformation. Therefore, the application of high strength steel sheets having mainly martensite or bainite microstructure to cold pressing is currently limited to components having relatively simple shapes, such as door beams and bumpers that are formed mainly by bending.

Actually, the high strength steel sheets described in PTL 1 and 2 do not have sufficient formability, and application to cold pressing for components having complex shapes has not progressed.

The present disclosure was developed in view of the current situation, and it would be helpful to provide a steel sheet that simultaneously achieves a strength of TS: 1310 MPa or more and excellent formability, together with an advantageous method of producing same.

Further, it would be helpful to provide a member using the steel sheet as a material and a method of producing same.

(Solution to Problem)

The inventors engaged in extensive studies and made the following discoveries.

(i) Steel sheets having microstructure that is mainly martensite or bainite typically have a high yield ratio, which is the ratio of yield stress to tensile strength, and therefore have a low strain hardening index, or n-value. The inventors investigated the relationship between formability (press formability) and steel sheet properties in actual press forming tests and found that steel sheets having a lower n-value tend to concentrate strain locally, resulting in inferior formability, even when elongation evaluated in tensile tests is equivalent.

(ii) With respect to methods of improving n-value, guidelines for controlling hardness and fraction of hard phases have been clarified to some extent in conventional dual-phase (DP) steels and the like. However, strain hardening properties of steel sheets having mainly martensite or bainite microstructure have not been focused on until now. The inventors conducted extensive studies on this point. In particular, the inventors focused on controlling morphology and dispersion of carbides that inhibit dislocation movement in grains as a method to improve strain hardening properties of steel sheets having mainly martensite or bainite microstructure.

(iii) As a result, the inventors thought that formability might be improved by controlling dispersion interval of carbides within a defined range. In practice, the narrower the dispersion interval of carbides, that is, the finer the carbides, the better the strain hardening properties and the better the formability. However, when carbides were excessively fine, the motion of dislocations was also excessively suppressed, making plastic deformation difficult and degrading formability.

(iv) Here, methods for quantifying dispersion interval of carbides include number density. The inventors examined correlation between number density of carbides and formability, but such correlation was low. The reason for this is not necessarily clear, but the inventors believe that in addition to dislocation motion, there is also an effect of carbide size, and that this is not fully reflected in number density. Further, the inventors studied correlation between average size of carbides and dispersion interval of carbides calculated from area fraction (hereinafter also referred to as calculated dispersion interval) and formability. However, such correlation was also low. The inventors believe that this is because calculated dispersion interval is underestimated compared to actual dispersion interval of carbides in actual microstructure due to non-uniform carbide size. Further, correlation between carbide dispersion interval, calculated from average size of carbides, and formability was insufficient.

(v) The inventors then considered that not only dispersion interval of the carbides but also non-uniformity of the carbides might contribute to the improvement of formability, and conducted further investigations. As a result, the inventors discovered that:

- a median value of the following Expression (1) allows evaluation of dispersion interval of carbides while taking into account non-uniformity of carbides in actual microstructure,
- correlation between the median value of Expression (1) and formability is high, and
- controlling the median value of Expression (1) in a range from 20 nm to 80 nm makes it possible to simultaneously achieve a strength of TS: 1310 MPa or more and excellent formability.

[Math. 1]

$$20 \leqq \left( 1.25 \times \sqrt{\frac{100\pi d_3}{6f d_1}} \right) - \frac{\pi d_2}{4 d_1} \leqq 80 \qquad \ldots (1)$$

Here,

$\pi$ is circle ratio,
f is area fraction [%] of the carbides,
$d_1$ is average value of circle equivalent diameter [nm] of the carbides,
$d_2$ is average value of the square of circle equivalent diameter [$nm^2$] of the carbides, and
$d_3$ is average value of the cube of circle equivalent diameter [$nm^3$] of the carbides.

(vi) Further, to obtain the above microstructure, in particular to control the median value of Expression (1) to be in a range from 20 nm to 80 nm, it is important to control production conditions, in particular a tempering process that is divided into two sections, and in each section tempering parameters, calculated from residence time and intermediate temperature, are separately and appropriately controlled. The inventors understand that by separately and appropriately controlling tempering parameters calculated from the residence time and intermediate temperature of each section, tempering conditions change midway, which causes non-uniformity of carbides.

The present disclosure is based on these discoveries and further studies.
Primary features of the present disclosure are as follows.

1. A steel sheet comprising a chemical composition containing (consisting of), in mass%,

C: 0.12 % or more and 0.40 % or less,
Si: 1.50 % or less,
Mn: 0.20 % or more and 3.50 % or less,
P: 0.050 % or less,
S: 0.0100 % or less,
sol.Al: 1.00 % or less, and
N: 0.010 % or less,
with the balance being Fe and inevitable impurity, wherein
total area fraction of martensite and bainite is 95 % or more and 100 % or less,
area fraction of carbides in grains of the martensite and the bainite is 5 % or more and 25 % or less,
area fraction of a region where kernel average misorientation, KAM, is 1° or less is 70 % or more,
Expression (1) is satisfied for dispersion interval of the carbides,
the steel sheet has a tensile strength of 1310 MPa or more,
[Math. 2]

$$20 \leqq \left( 1.25 \times \sqrt{\frac{100\pi d_3}{6f d_1}} \right) - \frac{\pi d_2}{4 d_1} \leqq 80 \qquad \ldots (1)$$

where

$\pi$ is circle ratio,
f is area fraction [%] of the carbides,

**EP 4 477 774 A1**

$d_1$ is average value of circle equivalent diameter [nm] of the carbides,
$d_2$ is average value of the square of circle equivalent diameter [nm$^2$] of the carbides, and
$d_3$ is average value of the cube of circle equivalent diameter [nm$^3$] of the carbides.

2. The steel sheet according to 1, above, wherein the chemical composition further contains at least one element selected from Group A, Group B, or Group A and Group B, in mass%,

Group A consists of
Cu: 1.00 % or less,
Ni: 1.00 % or less,
Mo: 0.50 % or less,
Cr: 1.00 % or less,
Zr: 0.100 % or less,
Ca: 0.0100 % or less,
Ti: 0.100 % or less,
Nb: 0.100 % or less,
B: 0.0100 % or less,
V: 0.200 % or less,
W: 0.200 % or less,
Sb: 0.100 % or less,
Sn: 0.100 % or less, and
Mg: 0.0100 % or less, and
Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to 1 or 2, above, further comprising a coated or plated layer on a surface.

4. A member formed using the steel sheet according to any one of 1 to 3, above.

5. A method of producing a steel sheet, the method comprising: a rolling process of rolling a steel slab having the chemical composition according to 1 or 2, above, to obtain a steel sheet;

an annealing process of annealing the steel sheet at an annealing temperature of $A_3$ or more for an annealing time of 30 s or more;

a first cooling process of cooling the steel sheet at an average cooling rate of 10 °C/s or less in a temperature range from the annealing temperature to a second cooling start temperature;

a second cooling process of cooling the steel sheet at an average cooling rate of 30 °C/s or more in a temperature range from the second cooling start temperature of 680 °C or more to 50 °C, to a cooling stop temperature of 50 °C or less;

a tempering process of tempering the steel sheet under a set of conditions satisfying Expressions (2), (3), and (4); and

a shape adjustment process of working the steel sheet to an elongation ratio of 0.1 % or more and 0.4 % or less, wherein

$$\lambda 1 \leq 5000 \qquad \ldots (2)$$

$$\lambda 2 \geq 3100 \qquad \ldots (3)$$

$$\lambda 2 \leq 0.88 \times \lambda 1 + 400 \qquad \ldots (4)$$

where
$\lambda 1$ is a tempering parameter of a first section of the tempering process,
$\lambda 2$ is a tempering parameter of a second section of the tempering process,
defined by the following Expressions (5) and (6),

$$\lambda 1 = T1 \times (\log t1 + 20) \qquad \ldots (5)$$

$$\lambda 2 = T2 \times (\log t2 + 20) \qquad \dots (6)$$

and
t1 is time in s of the first section of the tempering process,
T1 is intermediate temperature in °C of the first section of the tempering process,
t2 is time in s of the second section of the tempering process,
T2 is intermediate temperature in °C of the second section of the tempering process, and
the first section and the second section of the tempering process are defined as time periods in the tempering process in a temperature range of 100 °C or more divided into two equal sections, the first half being the first section and the second half being the second section.

6. The method of producing a steel sheet according to 5, above, further comprising a coating or plating treatment process of subjecting the steel sheet to a coating or plating treatment after the tempering process, before the shape adjustment process.

7. A method of producing a member, wherein the steel sheet according to any one of 1 to 3, above, is subjected to at least one of a forming process or a joining process to produce the member.

(Advantageous Effect)

According to the present disclosure, a steel sheet that simultaneously achieves a strength of TS: 1310 MPa or more and excellent formability is obtainable. Further, due to the above properties, the steel sheet is also applicable by cold pressing to various components for which complex shapes are required, thereby contributing to increased component strength and weight reduction more advantageously in terms of cost and productivity. In particular, the steel sheet is suitable as a steel sheet for cold pressing, applied to automobiles, home appliances, and the like via cold pressing.

BRIEF DESCRIPTION OF THE DRAWINGS

In the accompanying drawings:

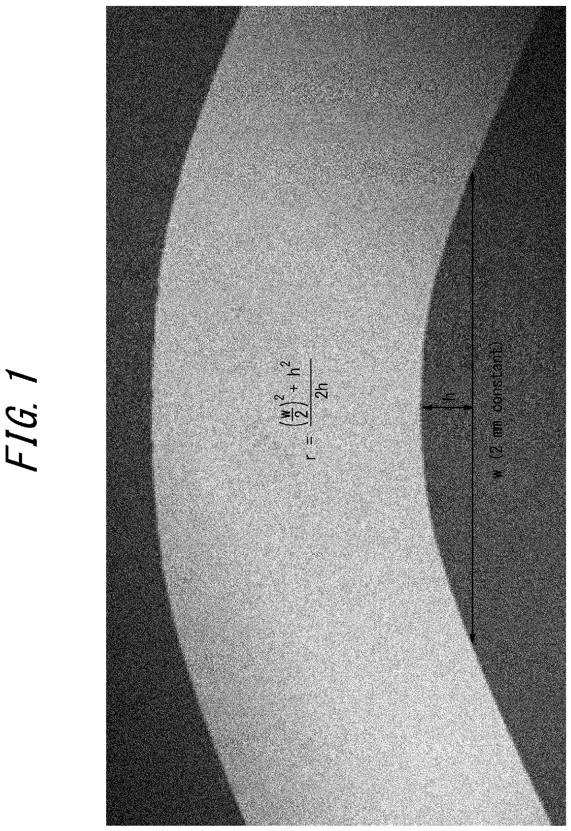

FIG. 1 is an example of a scanning electron microscopy (SEM) image of a thickness cross-section of a steel sheet taken perpendicular to a bending ridge line due to 90-degree V-bending.

DETAILED DESCRIPTION

The following describes embodiments of the present disclosure.

[1] Steel sheet

First, the chemical composition of a steel sheet according to an embodiment of the present disclosure is described. Hereinafter, although the unit in all chemical compositions is "mass%", this may be indicated simply as "%", unless otherwise specified.

C: 0.12 % or more and 0.40 % or less

C is included from the viewpoint of increasing strength of martensite and bainite and securing a strength of TS: 1310 MPa or more. When C content is less than 0.12 %, stably obtaining the defined strength is difficult. The C content is therefore 0.12 % or more. From the viewpoint of obtaining TS: 1470 MPa or more, the C content is preferably 0.18 % or more. From the viewpoint of obtaining TS: 1700 MPa or more, the C content is more preferably 0.24 % or more. However, when the C content exceeds 0.40 %, strength becomes too high and securing excellent formability becomes difficult. The C content is therefore 0.40 % or less. The C content is preferably 0.36 % or less. The C content is more preferably 0.32 % or less.

Si: 1.50 % or less

Si can be added as a strengthening element by solid solution strengthening. A lower limit of Si content is not particularly limited, and may be 0 %. However, from the viewpoint of obtaining the above effect, the Si content is preferably 0.02 % or more. The Si content is more preferably 0.10 % or more. However, when the Si content exceeds 1.50 %, the effect is saturated. Further, excess content increases deformation resistance during hot rolling and is therefore undesirable. The Si content is therefore 1.50 % or less. The Si content is preferably 1.20 % or less. The Si content is more preferably 1.00 % or less. The Si content is even more preferably 0.80 % or less.

Mn: 0.20 % or more and 3.50 % or less

Mn is an element that improves hardenability of steel and is included to secure martensitic microstructure. Here, from the viewpoint of securing martensite in an industrially stable manner, Mn content is 0.20 % or more. The Mn content is preferably 0.80 % or more. However, excessive Mn content may degrade formability through the formation of coarse MnS and Mn segregation. The Mn content is therefore 3.50 % or less. The Mn content is preferably 3.00 % or less. The Mn content is more preferably 2.50 % or less. The Mn content is even more preferably 2.00 % or less.

P: 0.050 % or less

P is an element that strengthens steel, but high content degrades spot weldability. Further, segregation of P degrades formability. P content is therefore 0.050 % or less. In view of the above, the P content is preferably 0.020 % or less. A lower limit of the P content is not particularly limited. However, decreasing the P content to less than 0.002 % requires significant cost. Therefore, from a cost perspective, the P content is preferably 0.002 % or more.

S: 0.0100 % or less

S degrades formability through the formation of coarse MnS. S content is therefore 0.0100 % or less. In view of the above, the S content is preferably 0.0050 % or less. The S content is more preferably 0.0020 % or less. A lower limit of the S content is not particularly limited. However, decreasing the S content to less than 0.0002 % requires significant cost. Therefore, from a cost perspective, the S content is preferably 0.0002 % or more.

sol.Al: 1.00 % or less

Al can be included to provide sufficient deoxidation and to decrease inclusions in steel. A lower limit of sol.Al content is not particularly limited and may be 0 %. However, from the viewpoint of stable deoxidation, the sol.Al content is preferably 0.005 % or more. The sol.Al content is more preferably 0.01 % or more. However, when the sol.Al content exceeds 1.00 %, a large amount of Al coarse inclusions are formed and formability deteriorates. The sol.Al content is therefore 1.00 % or less. The sol.Al content is preferably 0.80 % or less. The sol.Al content is more preferably 0.50 % or less.

N: 0.010 % or less,

N forms coarse nitrides and degrades formability. N content is therefore 0.010 % or less. The N content is preferably 0.0080 % or less. A lower limit of the N content is not particularly limited, and may be 0 %. However, from the viewpoint of industrial implementation, the N content is preferably 0.0005 % or more.

Basic composition of the steel sheet according to an embodiment of the present disclosure is described above. The steel sheet according to an embodiment of the present disclosure has a chemical composition including the basic composition above, with the balance being Fe (iron) and inevitable impurity. Here, the steel sheet according to an embodiment of the present disclosure preferably has a chemical composition consisting of the basic composition above, with the balance being Fe and inevitable impurity. In addition to the above basic composition, the steel sheet according to an embodiment of the present disclosure may contain one or more elements selected from the following optionally added components. The effects of the present disclosure are obtainable whenever the content of the following optionally added components is equal to or less than the upper limits indicated below, and therefore there is no particular need to set a lower limit. Further, when any of the optionally added components listed below are contained at less than a preferred lower limit described below, the component is included as inevitable impurity.

Cu: 1.00 % or less,
Ni: 1.00 % or less,
Mo: 0.50 % or less,
Cr: 1.00 % or less,
Zr: 0.100 % or less,
Ca: 0.0100 % or less,
Ti: 0.100 % or less,
Nb: 0.100 % or less,

B: 0.0100 % or less,
V: 0.200 % or less,
W: 0.200 % or less,
Sb: 0.100 % or less,
Sn: 0.100 % or less, and
Mg: 0.0100 % or less.

Cu: 1.00 % or less

Cu is an element that improves corrosion resistance. Further, Cu has an effect of coating the steel sheet surface with corrosion products to suppress hydrogen entry to the steel sheet and improve delayed fracture resistance. In view of the above, Cu content is preferably more than 0 %. The Cu content is more preferably 0.01 % or more. In particular, from the viewpoint of improving delayed fracture resistance, the Cu content is even more preferably 0.05 % or more. However, the Cu content being too high may cause surface defects. Therefore, when Cu is included, the Cu content is preferably 1.00 % or less.

Ni: 1.00 % or less

Ni is another element that improves corrosion resistance. In view of the above, Ni content is preferably more than 0 %. The Ni content is more preferably 0.01 % or more. However, when the Ni content is too high, scale formation in the heating furnace becomes uneven, causing surface defects. Further, costs are increased. Therefore, when Ni is included, the Ni content is preferably 1.00 % or less.

Mo: 0.50 % or less

Mo can be included for the purpose of obtaining the effects of improving hardenability of steel and stably securing the defined strength. From the viewpoint of obtaining the above effects, Mo content is preferably more than 0 %. The Mo content is more preferably 0.001 % or more. The Mo content is even more preferably 0.005 % or more. However, the Mo content exceeding 0.50 % leads to degradation of chemical convertibility. Therefore, when Mo is included, the Mo content is preferably 0.50 % or less.

Cr: 1.00 % or less

Cr can be included for the purpose of obtaining the effect of improving hardenability of steel. From the viewpoint of obtaining the above effect, Cr content is preferably more than 0 %. The Cr content is more preferably 0.001 % or more. However, the Cr content exceeding 1.00 % leads to degradation of chemical convertibility. Therefore, when Cr is included, the Cr content is preferably 1.00 % or less. From the viewpoint of preventing degradation of chemical convertibility, the Cr content is more preferably 0.20 % or less.

Zr: 0.100 % or less

Zr contributes to higher strength through the refinement of prior $\gamma$ grain size and ensuing refinement of the internal structure of martensite. In view of the above, Zr content is preferably more than 0 %. The Zr content is more preferably 0.001 % or more. However, excessive Zr content increases coarse Zr precipitates, leading to degradation of delayed fracture resistance. Therefore, when Zr is included, the Zr content is preferably 0.100 % or less.

Ca: 0.0100 % or less

Ca has the effects of fixing S as CaS and improving delayed fracture resistance. From the viewpoint of obtaining such effects, Ca content is preferably more than 0 %. The Ca content is more preferably 0.0001 % or more. However, excessive Ca content degrades surface quality. Therefore, when Ca is included, the Ca content is preferably 0.0100 % or less. The Ca content is more preferably 0.0050 % or less.

Ti: 0.100 % or less

Ti forms TiN prior to the formation of BN. This secures solute B and has the effect of stabilizing hardenability. From the viewpoint of achieving such an effect, the Ti content is preferably more than 0 %. The Ti content is more preferably 0.002 % or more. However, excessive Ti content causes the formation of large amounts of inclusions such as coarse TiN and TiC, which degrade delayed fracture resistance. The Ti content is therefore 0.100 % or less. The Ti content is preferably 0.060 % or less. The Ti content is more preferably 0.055 % or less.

Nb: 0.100 % or less

Nb contributes to higher strength through the refinement of prior $\gamma$ grain size and ensuing refinement of the internal structure of martensite. In view of the above, Nb content is preferably more than 0 %. The Nb content is more preferably 0.002 % or more. However, excessive Nb content increases coarse Nb precipitates, leading to degradation of delayed fracture resistance. Therefore, when Nb is included, the Nb content is preferably 0.100 % or less.

B: 0.0100 % or less

B is an element that improves hardenability of steel and has the advantage of increasing martensite formation even at low Mn content. From the viewpoint of obtaining these effects, the B content is preferably more than 0 %. The B content is more preferably 0.0002 % or more. The B content is even more preferably 0.0005 % or more. However, when the B content exceeds 0.0100 %, the effects are saturated. The B content is therefore 0.0100 % or less.

V: 0.200 % or less

V can be included for the purpose of obtaining the effects of improving hardenability of steel and increasing strength through refinement of martensite. From the viewpoint of obtaining these effects, V content is preferably more than 0 %. The V content is more preferably 0.001 % or more. However, when the V content exceeds 0.200 %, castability degrades. Therefore, when V is included, the V content is preferably 0.200 % or less.

W: 0.200 % or less

W contributes to higher strength through the formation of fine W carbides and W carbonitrides. In view of the above, W content is preferably more than 0 %. The W content is more preferably 0.001 % or more. However, excessive W content increases coarse precipitates remaining in a non-solid solution state during slab heating in a hot rolling process, leading to degradation of delayed fracture resistance. Therefore, when W is included, the W content is preferably 0.200 % or less.

Sb: 0.100 % or less

Sb inhibits oxidation and nitridation of the surface layer of the steel sheet, thereby suppressing a decrease in C and B. The suppression of a decrease in C and B inhibits ferrite formation in the surface layer of the steel sheet and contributes to higher strength. In view of the above, Sb content is preferably more than 0 %. The Sb content is more preferably 0.001 % or more. However, when the Sb content exceeds 0.100 %, castability degrades. Further, Sb segregates at prior $\gamma$ grain boundaries, leading to degradation of delayed fracture resistance. Therefore, when Sb is included, the Sb content is preferably 0.100 % or less.

Sn: 0.100 % or less

Sn inhibits oxidation and nitridation of the surface layer of the steel sheet, thereby suppressing a decrease in C and B. The suppression of a decrease in C and B inhibits ferrite formation in the surface layer of the steel sheet, contributes to higher strength, and improves delayed fracture resistance. In view of the above, Sn content is preferably more than 0 %. The Sn content is more preferably 0.001 % or more. However, when the Sn content exceeds 0.100 %, castability degrades. Further, Sn segregates at prior $\gamma$ grain boundaries, leading to degradation of delayed fracture resistance. Therefore, when Sn is included, the Sn content is preferably 0.100 % or less.

Mg: 0.0100 % or less

Mg fixes O as MgO and improves delayed fracture resistance. In view of the above, Mg content is preferably more than 0 %. The Mg content is more preferably 0.0001 % or more. However, excessive Mg content leads to degradation of surface quality and delayed fracture resistance. Therefore, when Mg is included, the Mg content is preferably 0.0100 % or less.

Elements other than the above include, for example, Se, As, Pb, Bi, Zn, Cs, Rb, Co, La, Tl, Nd, Y, In, Be, Hf, Tc, Ta, O, La, Ce, Pr, and the like. The total content of one or more elements selected from this list is acceptable when 0.02 % or less. Of course, the content of any of these elements may be 0 %.

Elements other than those described above are Fe and inevitable impurity.

The following describes the microstructure of the steel sheet according to an embodiment of the present disclosure.

The microstructure of the steel sheet according to an embodiment of the present disclosure:

total area fraction of martensite and bainite is 95 % or more and 100 % or less,
area fraction of carbides in grains of the martensite and the bainite is 5 % or more and 25 % or less,
area fraction of a region where kernel average misorientation, KAM, is 1° or less is 70 % or more,
and Expression (1) is satisfied for dispersion interval of the carbides.

The reasons for each of these limitations are described below. Note that area fraction is the area fraction relative to the entire microstructure.

Total area fraction of martensite and bainite: 95 % or more and 100 % or less

To obtain the defined strength, the total area fraction of martensite and bainite is 95 % or more. When the total area fraction of martensite and bainite is less than 95 %, residual microstructure ferrite, retained austenite and pearlite increase, making obtaining the defined strength difficult. Methods to secure the defined strength in a microstructure with a total area fraction of martensite and bainite of less than 95 % include, for example, lowering the tempering temperature or increasing the C content. However, in the case of lowering tempering temperature, toughness is reduced and formability deteriorates. Further, the method of increasing the C content may degrade weldability. The total area fraction of martensite and bainite is therefore 95 % or more. An upper limit of the total area fraction of martensite and bainite is not particularly limited and may be 100 %.

Area fraction of residual microstructure: 5 % or less

Residual microstructure other than martensite and bainite may reduce strength. The area fraction of the residual microstructure is therefore 5 % or less. A lower limit of the area fraction of the residual microstructure is not particularly limited, and the area fraction may be 0 %. Residual microstructure other than martensite and bainite may include ferrite, retained austenite, and pearlite.

Here, the total area fraction of martensite and bainite is measured as follows.

An L-section of the steel sheet (vertical section parallel to the rolling direction) is polished, corroded with nital, then observed by scanning electron microscopy (SEM) at a 1/4 sheet thickness position of the steel sheet with 4 fields of view at 2000× magnification. Image interpretation is performed on the micrographs captured. Both martensite and bainite are regions of gray contrast. Martensite and bainite may contain internal inclusions such as carbides, nitrides, sulfides, and oxides, but regions occupied by such inclusions are included in the martensite and bainite area. Further, the gray contrast region may contain retained austenite, and therefore the total area fraction of martensite and bainite is calculated by subtracting the area fraction of retained austenite from the area fraction of the gray contrast region by the method described below.

The martensite and bainite are composed mainly of so-called tempered martensite and tempered bainite that have been tempered during the production process. Here, tempered martensite and tempered bainite include martensite and bainite that have self-tempered during continuous cooling. Further, some martensite may contain so-called fresh martensite that has not undergone tempering, with an area fraction of 5 % or less (in each of the Examples described below, the area fraction of fresh martensite (with no internal carbides observed) was 5 % or less). Tempered martensite typically contains internal white contrast carbide. On the other hand, no internal carbides are observed in fresh martensite.

Of the residual microstructure, ferrite is region of black contrast. Pearlite is a layered microstructure of ferrite and plate-like, white contrast cementite.

Martensite and bainite can basically be distinguished based on the contrast difference in the SEM micrograph described above. However, when distinguishing between the two is difficult, it is possible to do so by observing the position and variants of carbides contained inside by SEM at 10,000 × magnification. That is, in bainite, carbides are formed at the interface of the lath-shape microstructure or within laths. Further, the crystal orientation relationship between bainitic ferrite and cementite is one type, and therefore the carbides formed extend in a single direction. On the other hand, in tempered martensite mainly composed of martensite, carbides are formed in laths. Further, there are two or more types of crystal orientation relationships between laths and carbides, and therefore the carbides formed extend in multiple directions. Accordingly, distinguishing tempered martensite from bainite by observing the position and variants of carbides contained inside is possible by SEM at 10,000× magnification.

The total area of the gray contrast region for the four fields of view is calculated, divided by the total area of the observation area for the four fields of view, and multiplied by 100. The area fraction of retained austenite measured by a method described below is subtracted from the obtained value, and the result is the total area fraction of martensite and bainite. However, the total area fraction of martensite and bainite is calculated by excluding island regions having an area of less than 1 $\mu m^2$ from the gray contrast regions.

Here, the area fraction of retained austenite is measured as follows.

The steel sheet is chemically polished with oxalic acid from the surface to a depth of 200 $\mu m$. Then, using the chemically polished surface as an observation plane, observation is performed by X-ray diffraction. MoK$\alpha$ radiation is used for incident X-rays to determine a ratio of diffraction intensity of the (200), (220), and (311) planes of fcc iron (austenite) to diffraction intensity of the (200), (211), and (220) planes of bcc iron. The volume fraction of retained austenite is then calculated from the ratio of the diffraction intensity of each plane. Then, assuming that the retained austenite is uniform in three dimensions, the volume fraction of the retained austenite is taken as the area fraction of retained austenite.

Further, the area fraction of the residual microstructure is determined by subtracting the total area fraction of martensite and bainite, determined as above, from 100 %.

[Area fraction of residual microstructure (%)] = 100 - [total area fraction of martensite and bainite (%)]

Area fraction of carbides in grains of martensite and bainite: 5 % or more and 25 % or less

Carbides in grains of martensite and bainite (hereinafter also referred to simply as carbides) improve strain hardening properties by inhibiting movement of dislocations during steel sheet deformation. When the area fraction of carbides is less than 5 %, the above effect is insufficient to obtain excellent formability. However, when the area fraction of carbides exceeds 25 %, securing the defined strength becomes difficult. The area fraction of carbides is therefore 5 % or more and 25 % or less. The area fraction of carbides is preferably 10 % or more. The area fraction of carbides is preferably 20 % or less.

Area fraction of region where KAM is 1° or less: 70 % or more

KAM is the average of orientation difference between one measurement point (pixel) and all its neighbors (pixels) according to electron backscatter diffraction (EBSD). The higher the KAM, the greater the amount of strain in the steel sheet. From the viewpoint of securing dimensional accuracy when forming into automotive parts, sheet shape is required to be good. Therefore, a shape adjustment process may be performed after the tempering process. In the shape adjustment process, the steel sheet is subjected to strain by rolling and bending. However, when the amount of strain applied is excessive, the ductility of the steel sheet is impaired and excellent formability cannot be obtained. That is, to secure good formability, KAM needs to be low. Here, excellent formability was obtained when the area fraction of the region where KAM was 1° or less was 70 % or more. The area fraction of the region where KAM is 1° or less is therefore 70 % or more. The area fraction of the region where KAM is 1° or less is more preferably 80 % or more. An upper limit of the area fraction of the region where KAM is 1° or less is not particularly limited and may be 100 %. The area fraction of the region where KAM is 1° or less is more preferably 95 % or less. In order to control KAM, appropriate control of conditions of the shape adjustment process is important, as described below.

Here, the area fraction of the region where KAM is 1° or less is measured as follows.

After polishing, an L-section (vertical section parallel to the rolling direction) of the steel sheet is finish polished with colloidal silica. A 100 $\mu m$ × 100 $\mu m$ region at a 1/4 sheet thickness position of the L-section of the steel sheet is analyzed by electron backscatter diffraction (EBSD). The step size was set to 0.1 $\mu m$. KAM for each measurement point is then obtained using OIM Analysis Ver. 7 software produced by TSL Solutions. The total area of the measurement points (pixels) having KAM of 1° or less is then divided by the total area of the analysis area (100 $\mu m$ × 100 $\mu m$) and multiplied by 100 to obtain the area fraction of the region where KAM is 1° or less.

Dispersion interval of carbides: Expression (1) is satisfied

As mentioned above, the dispersion interval of carbides, taking into account the non-uniformity of carbides in actual microstructure, can be expressed by the median value of Expression (1). By satisfying Expression (1), that is, by controlling the dispersion interval of carbides (hereinafter also referred to simply as dispersion interval), expressed as the median value of Expression (1), to be in the range from 20 nm to 80 nm, strength of TS: 1310 MPa or more and excellent formability can be simultaneously realized. Here, when the dispersion interval is less than 20 nm, dislocation motion is excessively inhibited during steel sheet deformation and excellent formability cannot be obtained. However, when the dispersion interval exceeds 80 nm, securing the defined strength becomes difficult. The dispersion interval is therefore 20 nm to 80 nm. The dispersion interval is preferably 30 nm or more. The dispersion interval is preferably 70 nm or less.

[Math. 3]

$$20 \leqq \left( 1.25 \times \sqrt{\frac{100\pi d_3}{6f d_1}} \right) - \frac{\pi d_2}{4 d_1} \leqq 80$$

$$\ldots(1)$$

Here,

$\pi$ is circle ratio,
f is area fraction [%] of the carbides,
$d_1$ is average value of circle equivalent diameter [nm] of the carbides (arithmetic mean of circle equivalent diameter of each carbide),
$d_2$ is average value of the square of circle equivalent diameter [nm$^2$] of the carbides (arithmetic mean of the square of circle equivalent diameter of each carbide), and
$d_3$ is average value of the cube of circle equivalent diameter [nm$^3$] of the carbides (arithmetic mean of the cube of circle equivalent diameter of each carbide).

Further, the area fraction of the carbides is measured and dispersion interval is calculated as follows.
An L-section (vertical section parallel to the rolling direction) of the steel sheet is corroded with nital after polishing. The L-section of the steel sheet is observed by SEM at a 1/4 sheet thickness position to obtain an in-lens SE image. The in-lens SE image is affected by the work function of the material surface and a change in surface potential due to local charging, and the image is sensitive to material differences, and therefore boundaries between steel substrate and carbides are clearly observable. Accelerating voltage: 1 kV, working distance: 4 mm, and magnification: 15,000×. The resulting in-lens SE image is subject to image interpretation by ImageJ and binarized into carbides and steel substrate. A particle analysis function then calculates the total area fraction of carbides, and the value is taken as the area fraction f of carbides. Further, the circle equivalent diameter of each carbide is calculated, and $d_1$, $d_2$, and $d_3$ are calculated based on the circle equivalent diameter of each carbide. Then, from these values, the median value of Expression (1) is calculated and used as the dispersion interval of the carbides.
The circle equivalent diameter of each carbide is calculated by the following expression.

[Circle equivalent diameter of each carbide (nm)] = (4 × [area of each carbide (nm$^2$)] / $\pi$)$^{1/2}$

In the calculation of area fraction and $d_1$, $d_2$, and $d_3$, carbides having a circle equivalent diameter of less than 5 nm are excluded.
Further, prior $\gamma$ grain boundaries, packet boundaries, and block boundaries are inherent in martensite regions, and carbides may precipitate film-like on these grain and other boundaries, but such carbides are not included in carbides present in martensite grains.
Mechanical properties of the steel sheet according to an embodiment of the present disclosure are described below.

Tensile strength (TS): 1310 MPa or more

The steel sheet according to an embodiment of the present has excellent formability even at a TS of 1310 MPa or more. Accordingly, TS is 1310 MPa or more. TS is preferably 1470 MPa or more. TS is more preferably 1700 MPa or more. An upper limit of TS is not particularly limited. For example, TS of 2500 MPa or less may be suitable. TS is measured by a tensile test in accordance with Japanese Industrial Standard JIS Z 2241. Details are described in the EXAMPLES section below.
Further, the steel sheet according to an embodiment of the present disclosure may have a coated or plated layer on a surface (one or both sides). The type of coated or plated layer is not particularly limited and may be, for example, a galvanized layer or a coating or plating layer of a metal other than zinc. Further, the coated or plated layer may contain components other than a main component such as zinc. Examples of galvanized layers include hot-dip galvanized layers, galvannealed layers, and electrogalvanized layers.
The thickness of the steel sheet according to an embodiment of the present disclosure is not particularly limited. The thickness of the steel sheet is preferably 0.5 mm or more. The thickness of the steel sheet is preferably 3.0 mm or less. Further, the steel sheet according to an embodiment of the present disclosure may be a hot-rolled steel sheet or a cold-rolled steel sheet.

[2] Member

A member according to an embodiment of the present disclosure is described below.

The member according to an embodiment of the present disclosure is a member made using the steel sheet described above as a material. For example, the steel sheet as a material is subjected to at least one of forming or joining, or, suitably, cold pressing, to make the member.

Here, the steel sheet simultaneously achieves a strength of TS: 1310 MPa or more and excellent formability. Further, due to the above properties, the steel sheet is applicable to various components by cold pressing, thereby contributing to increased component strength and weight reduction more advantageously in terms of cost and productivity. Therefore, the member according to an embodiment of the present disclosure is particularly suitable for application as a member for use in automobiles, home appliances, and the like.

[3] Method of producing steel sheet

The following describes a method of producing a steel sheet according to an embodiment of the present disclosure.

The method of producing a steel sheet according to an embodiment of the present disclosure includes:

a rolling process of rolling a steel slab having the above chemical composition to obtain a steel sheet;

an annealing process of annealing the steel sheet at an annealing temperature of $A_3$ or more for an annealing time of 30 s or more;

a first cooling process of cooling the steel sheet at an average cooling rate of 10 °C/s or less in a temperature range from the annealing temperature to a second cooling start temperature;

a second cooling process of cooling the steel sheet at an average cooling rate of 30 °C/s or more in a temperature range from the second cooling start temperature of 680 °C or more to 50 °C, to a cooling stop temperature of 50 °C or less;

a tempering process of tempering the steel sheet under a set of conditions satisfying Expressions (2), (3), and (4); and

a shape adjustment process of working the steel sheet to an elongation ratio of 0.1 % or more and 0.4 % or less.

Unless otherwise specified, each temperature above refers to a surface temperature of the steel slab or the steel sheet.

[Rolling process]

First, a steel slab is rolled, for example by hot rolling or hot rolling and cold rolling, to make a steel sheet. Methods of preparing a steel slab (production conditions), hot rolling conditions and cold rolling conditions are not particularly limited and may be carried out in accordance with conventional methods. Pickling may be optionally applied to a hot-rolled steel sheet after hot rolling. Pickling conditions are also not particularly limited, and a conventional method may be followed. Further, pickling may be optionally applied to a cold-rolled steel sheet after cold rolling. Pickling conditions are also not particularly limited, and a conventional method may be followed.

[Annealing process]

The steel sheet (hot-rolled steel sheet or cold-rolled steel sheet) obtained as described above is then annealed at an annealing temperature of $A_3$ temperature or more for an annealing time of 30 s or more.

Annealing temperature: $A_3$ temperature or more

In order to obtain the martensite and bainite dominated microstructure described above in the microstructure of the final product steel sheet, the annealing temperature needs to be the $A_3$ temperature or more.

That is, when the annealing temperature is less than the $A_3$ temperature, sufficient austenite is not formed during annealing. As a result, the defined total area fraction of martensite and bainite cannot be obtained in the final product, and therefore a TS of 1310 MPa or more cannot be obtained. The annealing temperature is therefore the $A_3$ temperature or more. An upper limit of the annealing temperature is not particularly limited, but when the annealing temperature exceeds a certain level, austenite grain size may become coarse and toughness may degrade. The annealing temperature is therefore preferably 1000 °C or less.

The annealing temperature is the maximum arrival temperature in the annealing process, and the temperature during holding during annealing may be constant or variable as long as the temperature is the $A_3$ temperature or more.

Further, the $A_3$ temperature is determined by the following expression.

$A_3$ temperature (°C) = 910 - 203 × [C%]$^{0.5}$ + 44.7 × [Si%] + 31.5 × [Mo%] - 30 × [Mn%] - 11 × [Cr%] + 700 × [P%] + 400 × [Al%] + 400 × [Ti%]

Annealing time: 30 s or more

When the annealing time is less than 30 s, sufficient austenite is not formed during annealing. As a result, the defined total area fraction of martensite and bainite cannot be obtained in the final product, and therefore a TS of 1310 MPa or more cannot be obtained. The annealing time is therefore 30 s or more. An upper limit of the annealing time is not particularly limited, but when the annealing time exceeds a certain level, austenite grain size may become coarse and toughness may degrade. The annealing time is therefore preferably 900 s or less.

The annealing time is the holding time (residence time) in the temperature range from the $A_3$ temperature and up.

[First cooling process]

The steel sheet annealed as described above is cooled at an average cooling rate of 10 °C/s or less in a temperature range from the annealing temperature to a second cooling start temperature (described below).

Average cooling rate in temperature range from annealing temperature to second cooling start temperature: 10 °C/s or less

When the average cooling rate in the temperature range from the annealing temperature to the second cooling start temperature (hereinafter also referred to as first cooling rate) exceeds 10 °C/s, temperature variations in the steel sheet before the start of the second cooling process may occur, and there is a risk that sheet shape after the second cooling process may not be flat. When the sheet shape is not flat, securing dimensional accuracy when forming into automotive parts becomes difficult, for example. The first cooling rate is therefore 10 °C/s or less. The first cooling rate is preferably 8 °C/s or less. A lower limit of the first cooling rate is not particularly limited. The first cooling rate is preferably 1 °C/s or more.

[Second cooling process]

The steel sheet is then cooled at an average cooling rate of 30 °C/s or more in a temperature range from the second cooling start temperature of 680 °C or more to 50 °C, to a cooling stop temperature of 50 °C or less.

Second cooling start temperature: 680 °C or more

When the second cooling start temperature is less than 680 °C, there is a risk of excessive formation of retained $\gamma$ and pearlite and the defined total area fraction of martensite and bainite not being obtained in the final product. Further, tempering of martensite and bainite may occur during cooling, resulting in excessive coarsening of carbides. The second cooling start temperature is therefore 680 °C or more. An upper limit of the second cooling start temperature is not particularly limited. For example, the second cooling start temperature is preferably 910 °C or less. Further, the second cooling start temperature is preferably the annealing temperature - 50 °C, or less.

Average cooling rate in temperature range from second cooling start temperature to 50 °C: 30 °C/s or more

When the average cooling rate in the temperature range from the second cooling start temperature to 50 °C (hereinafter also referred to as the second cooling rate) is less than 30 °C/s, there is a risk of excessive formation of retained $\gamma$ and pearlite and the defined total area fraction of martensite and bainite not being obtained in the final product. Further, tempering of martensite and bainite may occur during cooling, resulting in excessive coarsening of carbides. The second cooling rate is therefore 30 °C/s or more. The second cooling rate is preferably 50 °C/s or more. The second cooling rate is more preferably 100 °C/s or more. An upper limit of the second cooling rate is not particularly limited. The second cooling rate is preferably 2000 °C/s or less.

Cooling stop temperature: 50 °C or less

From the viewpoint of inhibiting coarsening of carbides, the cooling stop temperature is 50 °C or less. A lower limit of the cooling stop temperature is not particularly limited. The cooling stop temperature is preferably 5 °C or more.

[Tempering process]

The steel sheet is then tempered under conditions that simultaneously satisfy the following Expressions (2), (3), and (4).

$$\lambda 1 \leq 5000 \qquad \ldots (2)$$

When $\lambda 1$ is excessive, the area fraction of carbides becomes excessive, making obtaining the defined strength difficult. $\lambda 1$ is therefore 5000 or less. $\lambda 1$ is more preferably 4700 or less. A lower limit of $\lambda 1$ is not particularly limited. For example, $\lambda 1$ is preferably 3500 or more.

$$\lambda 2 \geq 3100 \qquad \ldots (3)$$

When $\lambda 2$ is too small, carbides become excessively fine and formability degrades. $\lambda 2$ is therefore 3100 or more.

$$\lambda 2 \leq 0.88 \times \lambda 1 + 400 \qquad \ldots (4)$$

Further, controlling $\lambda 2$ to satisfy Expression (4) in relation to $\lambda 1$ results in non-uniformity in the size of carbides. This makes it possible to satisfy Expression (1) regarding the dispersion interval of carbides and simultaneously achieve the strength of TS: 1310 MPa or more and excellent formability. $\lambda 2$ is therefore controlled to satisfy Expression (4) in relation to $\lambda 1$.

In Expressions (2) to (4):

$\lambda 1$ is a tempering parameter of a first section of the tempering process,
$\lambda 2$ is a tempering parameter of a second section of the tempering process,
defined by the following Expressions (5) and (6),

$$\lambda 1 = T1 \times (\log t1 + 20) \qquad \ldots (5)$$

$$\lambda 2 = T2 \times (\log t2 + 20) \qquad \ldots (6)$$

and
$t1$ is time in s of the first section of the tempering process,
$T1$ is intermediate temperature in °C of the first section of the tempering process,
$t2$ is time in s of the second section of the tempering process, and
$T2$ is intermediate temperature in °C of the second section of the tempering process.

The log in Expressions (5) and (6) represents the common logarithm (base = 10).

The first section and the second section of the tempering process are defined as time periods in the tempering process in a temperature range of 100 °C or more divided into two equal sections, the first half (of the tempering process in a temperature range of 100 °C or more) being the first section and the second half (of the tempering process in a temperature range of 100 °C or more) being the second section.

Further, temperatures at the midpoints of the first section and the second section are measured, and the measured values are T1 and T2, respectively.

t1 and t2 are not particularly limited. For example, t1 and t2 are each preferably 200 s to 700 s. Further, T1 and T2 are also not particularly limited. For example, T1 is preferably 150 °C to 220 °C. T2 is preferably 150 °C to 200 °C.

[Shape adjustment process]

The obtained steel sheet is then worked to flatten the sheet shape (shape adjustment) from the viewpoint of stabilizing shape accuracy of press forming. The working may be skin pass rolling (temper rolling) or leveling, for example, and any method is acceptable as long as an appropriate elongation ratio can be controlled. Here, the elongation ratio needs to be 0.1 % or more to obtain a good sheet shape. However, when the elongation ratio exceeds 0.4 %, the formability of the steel sheet degrades. An upper limit of the elongation ratio is therefore 0.4 %. The upper limit of the elongation ratio is preferably 0.3 % or less. The elongation ratio is calculated by the following Expression (7).

$$\text{Elongation ratio (\%)} = \{(V0 - Vi) / Vi\} \times 100 \qquad \dots (7)$$

Here,

V0 is output sheet passing speed (m/s) of shape adjustment equipment, and
Vi is input sheet passing speed (m/s) of the shape adjustment equipment.

[Coating or plating treatment process]

Further, the resulting steel sheet may be subjected to coating or plating treatment. Through the coating or plating treatment, the steel sheet may be provided with a coated or plated layer on a surface. Coating or plating treatment methods are not particularly limited and include, for example, hot dip coating and electroplating. Further, the coating or plating treatment may include an alloying process after hot dip coating. Further, the type of coating or plating is not particularly limited and includes, for example, zinc coating or plating or coating or plating of a metal other than zinc. The conditions of the coating or plating treatment are not particularly limited and may follow a conventional method. A coating or plating bath may contain components other than a main component such as zinc. Further, the coating or plating treatment is preferably performed after the tempering process, before the shape adjustment process.

Each of the above processes after the annealing process may optionally be performed by continuous annealing or batch annealing. From the viewpoint of productivity, continuous annealing is preferred.

Conditions other than those described above are not particularly limited, and a conventional method may be used.

[4] Method of producing member

The following describes a method of producing a member according to an embodiment of the present disclosure.

The method of producing a member according to an embodiment of the present disclosure includes applying at least one of forming or joining, or, suitably, cold pressing, to the steel sheet (for example, a steel sheet produced by the method of producing a steel sheet) to produce the member.

Here, a forming method is not particularly limited, and a typical processing method such as press working may be used, for example. Further, a joining method is also not particularly limited, and for example, typical welding such as spot welding, laser welding, arc welding, and the like, rivet joining, swaging joining, and the like may be used. Forming and joining conditions are not particularly limited and may follow a conventional method. Cold pressing conditions are also not particularly limited, and may follow a conventional method.

EXAMPLES

Steel having the chemical compositions listed in Table 1 (the balance being Fe and inevitable impurity) was melted and cast into steel slabs. The obtained steel slabs were hot rolled to obtain hot-rolled steel sheets under a set of conditions including: rolling finish temperature: 840 °C to 950 °C and coiling temperature: 400 °C to 700 °C. The obtained hot-rolled steel sheets were then subjected to pickling and subsequent cold rolling to obtain cold-rolled steel sheets. The obtained cold-rolled steel sheets were subjected to heat treatment by continuous annealing (annealing process, first cooling process, second cooling process, and tempering process) under sets of conditions listed in Table 2. The cooling stop temperature in the second cooling process was room temperature (25 °C) in each case. Coating or plating treatment (electrogalvanization treatment) was then applied to at least one cold-rolled steel sheet (No. 18 cold-rolled steel sheet) to provide a coated or plated layer on at least one surface. The cold-rolled steel sheet or plated steel sheet was then subjected to shape adjustment by temper rolling under a set of conditions listed in Table 2 to obtain a steel sheet (thickness: 1.2 mm) as the final product. The annealing time of No. 27 was the holding time at the annealing temperature of No. 27. Further, conditions other than those specified were in accordance with a conventional method.

Using the resulting steel sheets, microstructure of the steel sheets was identified, and the area fraction of carbides in grains of martensite and bainite were measured as described above. Further, the dispersion interval of carbides (median value of Expression (1)) was determined as described above. Results are listed in Table 3.

Further, tensile tests were conducted in accordance with JIS Z 2241 and JIS Z 2253, and TS and n-value were measured. That is, a JIS No. 5 test piece was taken from each steel sheet such that the longitudinal direction was perpendicular to the rolling direction of the steel sheet. The collected test piece was subjected to tensile testing at a crosshead velocity of 10 mm/min to measure TS and n-value. The results are listed in Table 3. The TS evaluation criteria were as follows.

• TS

Pass: 1310 MPa or more
Fail: less than 1310 MPa
Further, n-value was calculated for the range of 1 % to 3 % strain.

Formability was evaluated by the n-value calculated above and by a 90-degree V-bend test. Generally, in bending tests, a steel sheet surface is observed after bending and bendability is evaluated based on the presence or absence of cracks. Here, however, strain dispersibility was evaluated. That is, during bending, a gap is created between the bending punch and the steel sheet before reaching the bottom dead center, and the tip of the bending test specimen of the steel sheet is bent with a curvature radius smaller than the tip of the bending punch. This phenomenon often occurs in actual press forming and is more pronounced for steel sheets that have lower strain dispersibility. When a steel sheet that has low strain dispersibility is press formed into a defined shape, strain is concentrated locally, leading to cracking. Here, a 30 mm × 100 mm test piece was cut out so that the longitudinal direction was orthogonal to the rolling direction of the steel sheet, and a 90-degree V-bend was performed. A thickness cross-section of the steel sheet perpendicular to the bending ridge line was then polished, and the cross-section was observed by SEM to determine the curvature radius r at the tip of the bending test specimen of the steel sheet using the following Expression (8).

$$r = \{(w / 2)^2 + h^2\} / 2h \qquad \dots (8)$$

Here, w and h are the distances indicated in FIG. 1, and w was kept constant (2 mm). FIG. 1 is an example of an SEM image of a thickness cross-section of a steel sheet taken perpendicular to a bending ridge line due to 90-degree V-bending. Then, r/R, a value obtained by dividing r by the curvature radius R of the bending punch, was determined, and r/R was used as an index of formability. Here, R was 4.0 mm.

In the present Examples, steel sheets having a thickness of 1.2 mm were used. When evaluating steel sheets having a thickness other than 1.2 mm, it is necessary to correct the value of the curvature radius at the tip of the bending test specimen of the steel sheet to be measured because the amount of springback after bending changes. For example, when sheet thickness is thin, stiffness of the steel sheet is smaller and therefore the springback amount is larger, and the value of the curvature radius at the tip of the bending test specimen of the steel sheet is larger. Therefore, when evaluating steel sheets having a thickness other than 1.2 mm, r is calculated as in the following Expression (9).

$$r = rt + 2.2 \times (t - 1.2) \qquad \dots (9)$$

Here, t is thickness of the steel sheet to be evaluated, and rt is curvature radius at the tip of the bending test specimen evaluated for a steel sheet of thickness t.

The 90-degree V-bending was performed at a forming speed of 30 mm/min and a press forming load of 10 tonnes. A reason for the above evaluation of formability for the present Examples is to more quantitatively analyze formability. Further, in tests in which components are actually press formed, formability can only be judged by the presence or absence of cracking. Further, although r/R is basically an index of strain dispersibility, excessive inclusions and segregation cause necking and cracking at the tip of the bending test specimen, and therefore the value of r/R becomes low. Therefore, the effects of inclusions, segregation, and the like can be evaluated, and correlate with the actual formability.

Steel sheets having an n-value of 0.13 or more and an r/R value of 0.60 or more were judged to have excellent formability ("Pass" in the "Evaluation" column of "Formability" in Table 3), and steel sheets having an n-value of less than 0.13 or an r/R value of less than 0.60 were judged to have insufficient formability ("Fail" in the "Evaluation" column of "Formability" in Table 3). The results are listed in Table 3.

Further, from the viewpoint of securing dimensional accuracy when forming into automotive parts, the sheet shape is required to be good. For this purpose, each steel sheet was cut into a 1000 mm wide and 500 mm long piece, then placed horizontally on a surface plate, and the height at the highest point on the surface plate (distance from the surface of the surface plate) was measured. The maximum warpage height was defined as the value obtained by subtracting the steel sheet thickness from the measured value, and was used as an index of sheet shape. A steel sheet having a maximum warpage height of 20 mm or less was judged to have good shape ("Pass" in the "Shape" column of Table 3), and a steel sheet having a maximum warpage height exceeding 20 mm was judged to have poor shape ("Fail" in the "Shape" column of Table 3). The results are listed in Table 3.

[Table 1]

Table 1

| Steel ID | Chemical composition (mass%) | | | | | | | | $A_3$ temp. (°C) | Remarks |
|---|---|---|---|---|---|---|---|---|---|---|
| | C | Si | Mn | P | S | sol.Al | N | Other | | |
| A | 0.13 | 0.89 | 2.12 | 0.013 | 0.0012 | 0.03 | 0.004 | | 833 | Conforming steel |
| B | 0.38 | 0.74 | 2.57 | 0.015 | 0.0007 | 0.04 | 0.004 | | 767 | Conforming steel |
| C | 0.20 | 1.44 | 1.01 | 0.012 | 0.0017 | 0.02 | 0.003 | | 870 | Conforming steel |
| D | 0.35 | 1.04 | 0.30 | 0.015 | 0.0015 | 0.01 | 0.002 | | 842 | Conforming steel |
| E | 0.36 | 1.37 | 3.43 | 0.016 | 0.0012 | 0.02 | 0.004 | | 766 | Conforming steel |
| F | 0.19 | 0.79 | 1.56 | 0.045 | 0.0019 | 0.02 | 0.002 | | 850 | Conforming steel |
| G | 0.28 | 0.44 | 2.22 | 0.003 | 0.0039 | 0.03 | 0.003 | | 770 | Conforming steel |
| H | 0.32 | 1.28 | 2.55 | 0.008 | 0.0007 | 0.50 | 0.004 | | 981 | Conforming steel |
| I | 0.18 | 0.02 | 0.89 | 0.013 | 0.0006 | 0.02 | 0.007 | | 815 | Conforming steel |
| J | 0.22 | 1.07 | 1.65 | 0.015 | 0.0006 | 0.03 | 0.003 | Cu:0.11, Ni:0.10 | 836 | Conforming steel |
| K | 0.15 | 1.00 | 2.89 | 0.012 | 0.0017 | 0.02 | 0.002 | Mo:0.11, Cr:0.23, Ca:0.0028 | 807 | Conforming steel |
| L | 0.31 | 1.16 | 0.61 | 0.020 | 0.0004 | 0.03 | 0.003 | Ti:0.014, B:0.0012, Zr:0.008 | 862 | Conforming steel |
| M | 0.21 | 0.80 | 1.14 | 0.010 | 0.0003 | 0.01 | 0.003 | Nb:0.015, B:0.0023, 0:0.0016 | 830 | Conforming steel |
| N | 0.14 | 0.87 | 0.74 | 0.007 | 0.0013 | 0.02 | 0.003 | V:0.01, W:0.004, Sb:0.006 | 864 | Conforming steel |
| O | 0.28 | 0.74 | 2.55 | 0.014 | 0.0010 | 0.01 | 0.003 | Sn:0.005, Mg:0.0005, Co:0.014 | 773 | Conforming steel |
| P | 0.20 | 0.71 | 0.78 | 0.008 | 0.0012 | 0.03 | 0.004 | Cu:0.13, Ti:0.042, B:0.0028 | 862 | Conforming steel |
| Q | 0.21 | 0.43 | 2.32 | 0.016 | 0.0011 | 0.01 | 0.003 | Ni:0.08, Mo:0.20, V:0.010 | 788 | Conforming steel |

(continued)

| Steel ID | Chemical composition (mass%) | | | | | | | | A$_3$ temp. (°C) | Remarks |
| | C | Si | Mn | P | S | sol.Al | N | Other | | |
|---|---|---|---|---|---|---|---|---|---|---|
| R | 0.31 | 0.91 | 2.75 | 0.010 | 0.0008 | 0.01 | 0.003 | Cr:0.05, Ti:0.034, B:0.0030 | 779 | Conforming steel |
| S | <u>0.11</u> | 0.12 | 1.05 | 0.007 | 0.0009 | 0.02 | 0.004 | | 829 | Comparative steel |
| T | <u>0.42</u> | 1.18 | 1.07 | 0.014 | 0.0018 | 0.03 | 0.002 | | 821 | Comparative steel |
| U | 0.20 | 0.70 | <u>0.11</u> | 0.008 | 0.0016 | 0.04 | 0.002 | | 869 | Comparative steel |
| V | 0.35 | 1.25 | <u>3.62</u> | 0.006 | 0.0011 | 0.04 | 0.003 | | 757 | Comparative steel |
| W | 0.26 | 0.69 | 1.94 | <u>0.054</u> | 0.0005 | 0.01 | 0.004 | | 821 | Comparative steel |
| X | 0.15 | 0.39 | 2.24 | <u>0.055</u> | <u>0.0108</u> | 0.02 | 0.004 | | 828 | Comparative steel |
| Y | 0.23 | 1.30 | 1.35 | 0.020 | 0.0007 | <u>1.01</u> | 0.004 | | 1248 | Comparative steel |
| Z | 0.22 | 0.40 | 2.75 | 0.018 | 0.0017 | 0.02 | <u>0.011</u> | | 771 | Comparative steel |
| AA | 0.21 | 0.80 | 1.14 | 0.010 | 0.0095 | 0.01 | 0.003 | | 830 | Conforming steel |
| AB | 0.20 | 0.70 | 1.05 | 0.010 | 0.0075 | 0.01 | 0.003 | | 830 | Conforming steel |
| AC | 0.22 | 0.60 | 1.11 | 0.010 | 0.0045 | 0.01 | 0.003 | | 819 | Conforming steel |
| AD | 0.39 | 0.02 | 3.46 | 0.002 | 0.0003 | 0.80 | 0.003 | | 1002 | Conforming steel |
| AE | 0.35 | 0.25 | 2.45 | 0.005 | 0.0003 | 0.61 | 0.003 | | 975 | Conforming steel |

* Underlined values do not satisfy a range or condition specified in the present disclosure.

[Table 2]

Table 2

| No. | Steel ID | Annealing | | First cooling | Second cooling | | Tempering | | | | Shape adjustment | Coating or plating treatment | Remarks |
|---|---|---|---|---|---|---|---|---|---|---|---|---|---|
| | | Annealing temp. (°C) | Annealing time (s) | First cooling rate (°C/s) | Second cooling start temp. (°C) | Second cooling rate (°C/s) | λ1 | λ2 | 0.88 × λ1 + 400 | t1 + t2 (s) | Elongation ratio (%) | | |
| 1 | A | 881 | 250 | 4 | 758 | 759 | 4399 | 3816 | 4271 | 558 | 0.2 | No | Example |
| 2 | B | 846 | 440 | 5 | 735 | 121 | 3641 | 3416 | 3604 | 594 | 0.1 | No | Example |
| 3 | C | 911 | 210 | 8 | 801 | 812 | 4214 | 3923 | 4108 | 520 | 0.2 | No | Example |
| 4 | D | 891 | 410 | 8 | 798 | 798 | 4002 | 3800 | 3922 | 609 | 0.1 | No | Example |
| 5 | E | 844 | 430 | 8 | 734 | 38 | 3878 | 3562 | 3812 | 700 | 0.2 | No | Example |
| 6 | F | 875 | 320 | 5 | 764 | 793 | 4027 | 3870 | 3944 | 471 | 0.1 | No | Example |
| 7 | G | 805 | 180 | 5 | 683 | 689 | 4428 | 3578 | 4297 | 462 | 0.3 | No | Example |
| 8 | H | 1006 | 580 | 5 | 910 | 118 | 3802 | 3578 | 3745 | 460 | 0.3 | No | Example |
| 9 | I | 859 | 430 | 8 | 780 | 802 | 4349 | 3475 | 4227 | 525 | 0.1 | No | Example |
| 10 | J | 843 | 540 | 5 | 749 | 785 | 4068 | 3934 | 3980 | 450 | 0.2 | No | Example |
| 11 | K | 816 | 580 | 8 | 713 | 101 | 4619 | 4284 | 4464 | 411 | 0.3 | No | Example |
| 12 | L | 872 | 150 | 5 | 774 | 837 | 3918 | 3490 | 3848 | 660 | 0.3 | No | Example |
| 13 | M | 875 | 570 | 5 | 748 | 802 | 4197 | 3812 | 4094 | 977 | 0.3 | No | Example |
| 14 | N | 870 | 480 | 4 | 788 | 882 | 4088 | 3369 | 3997 | 579 | 0.3 | No | Example |
| 15 | O | 800 | 420 | 4 | 714 | 688 | 4837 | 4476 | 4657 | 806 | 0.2 | No | Example |
| 16 | P | 903 | 350 | 6 | 813 | 845 | 4380 | 3754 | 4255 | 446 | 0.2 | No | Example |
| 17 | Q | 810 | 250 | 7 | 727 | 665 | 4021 | 3663 | 3938 | 435 | 0.1 | No | Example |
| 18 | R | 814 | 420 | 8 | 735 | 90 | 3775 | 3640 | 3722 | 810 | 0.2 | Yes | Example |
| 19 | S | 847 | 200 | 7 | 780 | 810 | 4148 | 3476 | 4050 | 530 | 0.1 | No | Comparative Example |
| 20 | T | 864 | 380 | 6 | 736 | 707 | 4480 | 4234 | 4342 | 502 | 0.2 | No | Comparative Example |
| 21 | U | 914 | 400 | 8 | 745 | 834 | 4099 | 3270 | 4007 | 500 | 0.1 | No | Comparative Example |

(continued)

| No. | Steel ID | Annealing | | First cooling | Second cooling | | | Tempering | | | | Shape adjustment | Coating or plating treatment | Remarks |
|---|---|---|---|---|---|---|---|---|---|---|---|---|---|---|
| | | Annealing temp. (°C) | Annealing time (s) | First cooling rate (°C/s) | Second cooling start temp. (°C) | Second cooling rate (°C/s) | λ1 | λ2 | 0.88 × λ1 + 400 | t1 + t2 (s) | Elongation ratio (%) | | | |
| 22 | V | 776 | 260 | 6 | 694 | 133 | 3936 | 3529 | 3864 | 836 | 0.1 | No | Comparative Example |
| 23 | W | 826 | 560 | 6 | 710 | 763 | 3942 | 3267 | 3869 | 675 | 0.3 | No | Comparative Example |
| 24 | X | 872 | 180 | 5 | 800 | 670 | 4000 | 3174 | 3920 | 447 | 0.2 | No | Comparative Example |
| 25 | Y | 1281 | 440 | 5 | 1161 | 763 | 4110 | 3551 | 4017 | 434 | 0.2 | No | Comparative Example |
| 26 | Z | 793 | 550 | 7 | 687 | 659 | 4530 | 3647 | 4387 | 895 | 0.3 | No | Comparative Example |
| 27 | A | 805 | 420 | 6 | 721 | 779 | 3946 | 3473 | 3873 | 708 | 0.3 | No | Comparative Example |
| 28 | A | 859 | 20 | 4 | 741 | 780 | 3965 | 3650 | 3889 | 676 | 0.2 | No | Comparative Example |
| 29 | C | 920 | 330 | 6 | 672 | 822 | 4250 | 4049 | 4140 | 467 | 0.2 | No | Comparative Example |
| 30 | D | 891 | 160 | 18 | 602 | 864 | 4627 | 4401 | 4471 | 741 | 0.1 | No | Comparative Example |
| 31 | L | 901 | 380 | 8 | 789 | 25 | 4182 | 3981 | 4080 | 463 | 0.2 | No | Comparative Example |
| 32 | L | 892 | 470 | 5 | 772 | 703 | 5361 | 5115 | 5117 | 433 | 0.1 | No | Comparative Example |
| 33 | O | 805 | 560 | 7 | 693 | 746 | 3615 | 3028 | 3581 | 788 | 0.2 | No | Comparative Example |
| 34 | P | 888 | 130 | 6 | 783 | 798 | 4544 | 4521 | 4399 | 809 | 0.2 | No | Comparative Example |
| 35 | Q | 812 | 250 | 7 | 730 | 644 | 4067 | 3620 | 3979 | 444 | 0.5 | No | Comparative Example |
| 36 | AA | 875 | 570 | 5 | 748 | 800 | 4349 | 3475 | 4227 | 525 | 0.3 | No | Example |
| 37 | AB | 875 | 570 | 6 | 750 | 812 | 4068 | 3934 | 3980 | 450 | 0.3 | No | Example |
| 38 | AC | 875 | 570 | 5 | 748 | 799 | 4619 | 4284 | 4464 | 411 | 0.3 | No | Example |
| 39 | AD | 1020 | 580 | 5 | 910 | 120 | 3915 | 3510 | 3845 | 635 | 0.3 | No | Example |
| 40 | AE | 1010 | 580 | 5 | 900 | 110 | 3802 | 3578 | 3745 | 460 | 0.3 | No | Example |

* Underlined values do not satisfy a range or condition specified in the present disclosure.

[Table 3]

Table 3

| No. | Steel ID | Area fraction of each phase | | Carbides in grains of martensite and bainite | | Area fraction of region where KAM is 1° or less (%) | Tensile strength (MPa) | Formability | | | Sheet shape | Remarks |
|---|---|---|---|---|---|---|---|---|---|---|---|---|
| | | Total martensite and bainite (%) | Residual microstructure (%) | Area fraction (%) | Dispersion interval (run) | | | n-value | r/R | Evaluation | | |
| 1 | A | 100 | 0 | 12 | 48 | 87 | 1356 | 0.15 | 0.73 | Pass | Pass | Example |
| 2 | B | 100 | 0 | 7 | 21 | 70 | 2161 | 0.16 | 0.73 | Pass | Pass | Example |
| 3 | C | 100 | 0 | 10 | 41 | 80 | 1561 | 0.15 | 0.74 | Pass | Pass | Example |
| 4 | D | 100 | 0 | 10 | 36 | 71 | 1960 | 0.15 | 0.73 | Pass | Pass | Example |
| 5 | E | 100 | 0 | 8 | 21 | 70 | 2169 | 0.16 | 0.73 | Pass | Pass | Example |
| 6 | F | 100 | 0 | 8 | 48 | 81 | 1522 | 0.15 | 0.74 | Pass | Pass | Example |
| 7 | G | 96 | 4 | 16 | 35 | 74 | 1805 | 0.15 | 0.71 | Pass | Pass | Example |
| 8 | H | 100 | 0 | 7 | 21 | 73 | 1917 | 0.16 | 0.74 | Pass | Pass | Example |
| 9 | I | 97 | 3 | 14 | 43 | 85 | 1383 | 0.15 | 0.74 | Pass | Pass | Example |
| 10 | J | 100 | 0 | 9 | 45 | 79 | 1664 | 0.15 | 0.74 | Pass | Pass | Example |
| 11 | K | 100 | 0 | 15 | 64 | 83 | 1475 | 0.14 | 0.70 | Pass | Pass | Example |
| 12 | L | 99 | 1 | 8 | 23 | 73 | 1892 | 0.16 | 0.74 | Pass | Pass | Example |
| 13 | M | 97 | 3 | 10 | 54 | 80 | 1540 | 0.15 | 0.73 | Pass | Pass | Example |
| 14 | N | 98 | 2 | 8 | 29 | 87 | 1349 | 0.15 | 0.76 | Pass | Pass | Example |
| 15 | O | 100 | 0 | 20 | 78 | 73 | 1808 | 0.14 | 0.66 | Pass | Pass | Example |
| 16 | P | 100 | 0 | 13 | 43 | 83 | 1518 | 0.15 | 0.73 | Pass | Pass | Example |
| 17 | Q | 100 | 0 | 9 | 42 | 80 | 1619 | 0.15 | 0.74 | Pass | Pass | Example |
| 18 | R | 100 | 0 | 6 | 37 | 70 | 2009 | 0.15 | 0.73 | Pass | Pass | Example |
| 19 | S | 97 | 3 | 9 | 45 | 88 | 1209 | 0.15 | 0.75 | Pass | Pass | Comparative Example |
| 20 | T | 99 | 1 | 18 | 47 | 65 | 2214 | 0.15 | 0.58 | Fail | Pass | Comparative Example |

| No. | Steel ID | Area fraction of each phase | | Carbides in grains of martensite and bainite | | Area fraction of region where KAM is 1° or less (%) | Tensile strength (MPa) | Formability | | | Sheet shape | Remarks |
|---|---|---|---|---|---|---|---|---|---|---|---|---|
| | | Total martensite and bainite (%) | Residual microstructure (%) | Area fraction (%) | Dispersion interval (run) | | | n-value | r/R | Evaluation | | |
| 21 | U | 48 | 52 | 10 | 23 | 91 | 1070 | 0.20 | 0.78 | Pass | Pass | Comparative Example |
| 22 | V | 100 | 0 | 9 | 25 | 68 | 2177 | 0.16 | 0.56 | Fail | Pass | Comparative Example |
| 23 | W | 98 | 2 | 8 | 23 | 76 | 1758 | 0.16 | 0.58 | Fail | Pass | Comparative Example |
| 24 | X | 100 | 0 | 8 | 24 | 86 | 1390 | 0.16 | 0.46 | Fail | Pass | Comparative Example |
| 25 | Y | 100 | 0 | 9 | 23 | 85 | 1396 | 0.16 | 0.55 | Fail | Pass | Comparative Example |
| 26 | Z | 98 | 2 | 16 | 51 | 78 | 1624 | 0.15 | 0.55 | Fail | Pass | Comparative Example |
| 27 | A | 65 | 35 | 5 | 36 | 92 | 1133 | 0.17 | 0.77 | Pass | Pass | Comparative Example |
| 28 | A | 52 | 48 | 6 | 43 | 93 | 1025 | 0.20 | 0.77 | Pass | Pass | Comparative Example |
| 29 | C | 68 | 32 | 10 | 46 | 85 | 1302 | 0.16 | 0.74 | Pass | Pass | Comparative Example |
| 30 | D | 52 | 48 | 18 | 65 | 87 | 1268 | 0.19 | 0.71 | Pass | Fail | Comparative Example |
| 31 | L | 46 | 54 | 12 | 41 | 89 | 1234 | 0.17 | 0.75 | Pass | Pass | Comparative Example |
| 32 | L | 99 | 1 | 28 | 91 | 75 | 1803 | 0.12 | 0.57 | Fail | Pass | Comparative Example |
| 33 | O | 99 | 1 | 4 | 13 | 72 | 1878 | 0.11 | 0.52 | Fail | Pass | Comparative Example |
| 34 | P | 98 | 2 | 15 | 84 | 84 | 1499 | 0.11 | 0.58 | Fail | Pass | Comparative Example |
| 35 | Q | 100 | 0 | 10 | 41 | 64 | 1614 | 0.11 | 0.55 | Fail | Pass | Comparative Example |
| 36 | AA | 97 | 3 | 13 | 30 | 81 | 1549 | 0.13 | 0.61 | Pass | Pass | Example |
| 37 | AB | 96 | 4 | 9 | 51 | 82 | 1523 | 0.14 | 0.69 | Pass | Pass | Example |
| 38 | AC | 96 | 4 | 17 | 67 | 80 | 1542 | 0.15 | 0.73 | Pass | Pass | Example |
| 39 | AD | 100 | 0 | 12 | 42 | 71 | 2000 | 0.13 | 0.62 | Pass | Pass | Example |
| 40 | AE | 100 | 0 | 10 | 35 | 72 | 1894 | 0.14 | 0.70 | Pass | Pass | Example |

* Underlined values do not satisfy a range or condition specified in the present disclosure.

As demonstrated in Table 3, both tensile strength (TS) and formability were acceptable for all of the Examples. Further, sheet shape was good. Further, the steel sheets of the Examples were used in various shapes of members obtained by various forming processes, including cold pressing, and in various shapes of members obtained by joining processes. In each case, the member had a target shape without cracking occurring, and had sufficient tensile strength (TS).

In contrast, at least one of tensile strength (TS) and formability was insufficient for each of the Comparative Examples.

INDUSTRIAL APPLICABILITY

According to the present disclosure, a steel sheet that simultaneously achieves a strength of TS: 1310 MPa or more and excellent formability is obtainable. Further, due to the above properties, the steel sheet is also applicable by cold pressing to various components for which complex shapes are required, thereby contributing to increased component strength and weight reduction more advantageously in terms of cost and productivity.

**Claims**

1. A steel sheet comprising a chemical composition containing, in mass%,

   C: 0.12 % or more and 0.40 % or less,
   Si: 1.50 % or less,
   Mn: 0.20 % or more and 3.50 % or less,
   P: 0.050 % or less,
   S: 0.0100 % or less,
   sol.Al: 1.00 % or less, and
   N: 0.010 % or less,
   with the balance being Fe and inevitable impurity, wherein
   total area fraction of martensite and bainite is 95 % or more and 100 % or less,
   area fraction of carbides in grains of the martensite and the bainite is 5 % or more and 25 % or less,
   area fraction of a region where kernel average misorientation, KAM, is 1° or less is 70 % or more,
   Expression (1) is satisfied for dispersion interval of the carbides,
   the steel sheet has a tensile strength of 1310 MPa or more,
   [Math. 1]

$$20 \leqq \left( 1.25 \times \sqrt{\frac{100\pi d_3}{6fd_1}} \right) - \frac{\pi d_2}{4d_1} \leqq 80$$

   $$\dots(1)$$

   Here,
   $\pi$ is circle ratio,
   f is area fraction [%] of the carbides,
   $d_1$ is average value of circle equivalent diameter [nm] of the carbides,
   $d_2$ is average value of the square of circle equivalent diameter [nm$^2$] of the carbides, and
   $d_3$ is average value of the cube of circle equivalent diameter [nm$^3$] of the carbides.

2. The steel sheet according to claim 1, wherein the chemical composition further contains at least one element selected from Group A, Group B, or Group A and Group B, in mass%,

   Group A consists of
   Cu: 1.00 % or less,
   Ni: 1.00 % or less,
   Mo: 0.50 % or less,
   Cr: 1.00 % or less,

Zr: 0.100 % or less,
Ca: 0.0100 % or less,
Ti: 0.100 % or less,
Nb: 0.100 % or less,
B: 0.0100 % or less,
V: 0.200 % or less,
W: 0.200 % or less,
Sb: 0.100 % or less,
Sn: 0.100 % or less, and
Mg: 0.0100 % or less, and
Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to claim 1, further comprising a coated or plated layer on a surface.

4. The steel sheet according to claim 2, further comprising a coated or plated layer on a surface.

5. A member made using the steel sheet according to any one of claims 1 to 4.

6. A method of producing a steel sheet, the method comprising:

a rolling process of rolling a steel slab having the chemical composition according to claim 1 or 2, to obtain a steel sheet;
an annealing process of annealing the steel sheet at an annealing temperature of $A_3$ or more for an annealing time of 30 s or more;
a first cooling process of cooling the steel sheet at an average cooling rate of 10 °C/s or less in a temperature range from the annealing temperature to a second cooling start temperature;
a second cooling process of cooling the steel sheet at an average cooling rate of 30 °C/s or more in a temperature range from the second cooling start temperature of 680 °C or more to 50 °C, to a cooling stop temperature of 50 °C or less;
a tempering process of tempering the steel sheet under a set of conditions satisfying Expressions (2), (3), and (4); and
a shape adjustment process of working the steel sheet to an elongation ratio of 0.1 % or more and 0.4 % or less, wherein

$$\lambda 1 \leq 5000 \qquad \ldots (2)$$

$$\lambda 2 \geq 3100 \qquad \ldots (3)$$

$$\lambda 2 \leq 0.88 \times \lambda 1 + 400 \qquad \ldots (4)$$

where,
$\lambda 1$ is a tempering parameter of a first section of the tempering process,
$\lambda 2$ is a tempering parameter of a second section of the tempering process,
defined by the following Expressions (5) and (6),

$$\lambda 1 = T1 \times (\log t1 + 20) \qquad \ldots (5)$$

$$\lambda 2 = T2 \times (\log t2 + 20) \qquad \ldots (6)$$

and
t1 is time in s of the first section of the tempering process,
T1 is intermediate temperature in °C of the first section of the tempering process,
t2 is time in s of the second section of the tempering process,
T2 is intermediate temperature in °C of the second section of the tempering process, and

the first section and the second section of the tempering process are defined as time periods in the tempering process in a temperature range of 100 °C or more divided into two equal sections, the first half being the first section and the second half being the second section.

7. The method of producing a steel sheet according to claim 6, further comprising a coating or plating treatment process of subjecting the steel sheet to a coating or plating treatment after the tempering process, before the shape adjustment process.

8. A method of producing a member, wherein the steel sheet according to any one of claims 1 to 4 is subjected to at least one of a forming process or a joining process to produce the member.

## FIG. 1

$$r = \frac{\left(\frac{w}{2}\right)^2 + h^2}{2h}$$

h

w (2 mm constant)

## INTERNATIONAL SEARCH REPORT

| International application No. |
| --- |
| **PCT/JP2022/040835** |

### A. CLASSIFICATION OF SUBJECT MATTER

*C22C 38/00*(2006.01)i; *C21D 9/46*(2006.01)i; *C22C 38/06*(2006.01)i; *C22C 38/60*(2006.01)i
FI: C22C38/00 301S; C22C38/00 301T; C22C38/00 301W; C22C38/06; C22C38/60; C21D9/46 G; C21D9/46 J; C21D9/46 T; C21D9/46 U

According to International Patent Classification (IPC) or to both national classification and IPC

### B. FIELDS SEARCHED

Minimum documentation searched (classification system followed by classification symbols)

C22C38/00-38/60; C21D8/00-8/04; C21D9/46-9/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/153392 A1 (JFE STEEL CORP.) 05 August 2021 (2021-08-05) claims, paragraphs [0077]-[0084], [0090] | 1-8 |
| A | WO 2020/090303 A1 (JFE STEEL CORP.) 07 May 2020 (2020-05-07) claims, paragraphs [0056]-[0064] | 1-8 |
| A | WO 2018/123356 A1 (KOBE STEEL, LTD.) 05 July 2018 (2018-07-05) claims, paragraphs [0051]-[0068] | 1-8 |
| A | WO 2016/152163 A1 (JFE STEEL CORP.) 29 September 2016 (2016-09-29) claims, paragraphs [0079]-[0084] | 1-8 |
| A | WO 2020/229898 A1 (ARCELORMITTAL) 19 November 2020 (2020-11-19) claims, tables 1-4 | 1-8 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 December 2022** | **17 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/040835** |

| Patent document cited in search report | | | Publication date (day/month/year) | Patent family member(s) | | | Publication date (day/month/year) |
| --- | --- | --- | --- | --- | --- | --- | --- |
| WO | 2021/153392 | A1 | 05 August 2021 | EP 4067524 A1 claims, paragraphs [0082]-[0091], [0097] CN 115003841 A | | | |
| WO | 2020/090303 | A1 | 07 May 2020 | EP 3875623 A1 claims, paragraphs [0049]-[0061] US 2022/0002827 A1 CN 112930413 A | | | |
| WO | 2018/123356 | A1 | 05 July 2018 | JP 2018-109222 A | | | |
| WO | 2016/152163 | A1 | 29 September 2016 | EP 3276022 A1 claims, paragraphs [0073]-[0081] US 2018/0100212 A1 CN 107429349 A | | | |
| WO | 2020/229898 | A1 | 19 November 2020 | WO 2020/229877 A1 US 2022/0213573 A1 CN 113748219 A JP 2022-532625 A | | | |

Form PCT/ISA/210 (patent family annex) (January 2015)

**REFERENCES CITED IN THE DESCRIPTION**

**Patent documents cited in the description**

- JP 6017341 B

- JP 2016148098 A